# EUROPEAN PATENT APPLICATION

(11) **EP 4 797 386 A1**
(43) Date of publication of application: **26.08.2026**
(21) Application number: 26152844.2
(22) Date of filing: 20.01.2026
(51) Int. Cl.: H01M 10/617, H01M 10/625, H01M 10/633, H01M 10/6556, H01M 10/6568, B60L 58/26

(54) **SYSTEM AND METHOD FOR CONTROLLING THE TEMPERATURE OF AN ELECTRIC BATTERY PACK BY MEANS OF A TEMPERATURE-REGULATING LIQUID, WITH AUTOMATIC RECONFIGURATION OF THE TEMPERATURE-REGULATING LIQUID PATH BASED ON THE VISCOSITY OF THE TEMPERATURE-REGULATING LIQUID**

(30) Priority: 20.02.2025 IT 202500003351
(71) Applicant: C.R.F. Società Consortile per Azioni, 10043 Orbassano (Torino) (IT)
(72) Inventor: ROSSI, Dario, 10043 Orbassano (Torino) (IT); BONFITTO, Angelo, 10129 Torino (IT); PAKSTYS, Saulius, 10129 Torino (IT)
(74) Representative: Buzzi, Notaro & Antonielli d'Oulx S.p.A.

(57) **Abstract**

An electric battery pack (1) is provided with an immersion-type temperature regulation system, which provides for the circulation of a temperature-regulating liquid, specifically a dielectric oil, through the battery pack. The system comprises a circuit (8) outside the battery pack (1) for the temperature-regulating liquid, which includes a pump (9) driven by an electric motor (M), a heater (10), a chiller (11) and a reservoir (13). The circuit (8) outside the battery pack (1) includes a plurality of electrically actuated control valves (VLV1, VLV2, VLV3, VLV4). An electronic controller (E) of the system activates different operating modes of the control valves (VLV1, VLV2, VLV3, VLV4) to modify the path followed by the temperature-regulating liquid in the circuit (8) as a function of the viscosity of the dielectric oil varying with temperature. In an example, the electronic controller (E) implements the different operating modes as a function of a signal (S) indicative of the electric current absorbed by the electric motor (M) driving the pump (9).

## Description

### Field of the invention

The present invention relates to systems and methods for controlling the temperature of electric battery packs, in particular electric battery packs for powering traction electric motors in electric or hybrid vehicles.

The invention relates, in particular, to a system for controlling the temperature of an electric battery pack of the type including:
- an electric battery pack, comprising a container and a plurality of battery cells arranged within the container so as to come into direct contact with a flow of a temperature-regulating liquid through the space within the container,
- a battery pack inlet, defined in said container, for the entry of the temperature-regulating liquid into the battery pack,
- a battery pack outlet defined in said container, for the exit of the temperature-regulating liquid from the battery pack,
- a circuit for the temperature-regulating liquid outside the battery pack, including:
   - a pump driven by an electric motor, to activate the circulation of the temperature-regulating liquid in said circuit and inside the battery pack, said pump having a suction inlet and a delivery outlet,
   - a first line connecting said battery pack outlet with the pump inlet,
   - a second line connecting the pump outlet with the battery pack inlet, and
   - a heater, a chiller, and a reservoir for the temperature-regulating liquid, arranged in series in said first line, and
wherein said temperature-regulating liquid is a dielectric oil having a viscosity that varies as a function of temperature.

### Background of the invention

Systems of the type indicated above are known and have been used for some time.

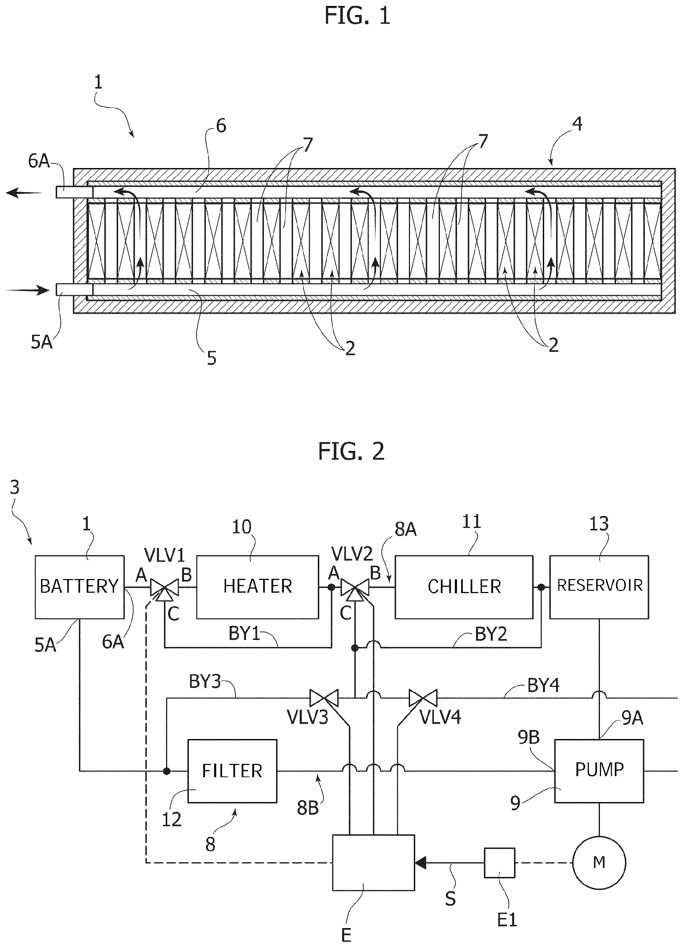

Figure 1 of the attached drawings schematically illustrates a module of a battery pack of the type mentioned above. With reference to figure 1, the number 1 generally indicates the battery module, including a container 4, within which a group of battery cells 2 is arranged side by side and spaced apart from each other, so as to define spaces 7 between one cell and another.

The schematic illustration in figure 1 refers to an example of a battery module using prismatic-type battery cells. However, the present invention is applicable to any type of battery pack, including any arrangement of one or more groups of battery cells, and using any type of battery cell, such as prismatic cells, or pouch-type cells, or cylindrical cells. The only essential condition for the application of the system according to the invention is that the battery pack has an immersion-type temperature regulation system, i.e., using a flow of a temperature-regulating liquid that passes through the battery pack in order to perform temperature regulation (which can be a heating action or a cooling action, depending on the operating conditions of the battery pack) in order to keep the battery cells within a predetermined temperature range.

Returning to the example of figure 1, inside the container 1A are defined an inlet collector chamber 5 for the temperature-regulating liquid, arranged below the group of battery cells 2, and an outlet collector chamber 6 for the temperature-regulating liquid, arranged above the group of battery cells 2. The inlet collector chamber 5 communicates with the outlet collector chamber 6 through the spaces 7 between the battery cells. It should be noted that in figure 1 the spaces 7 between the cells have been illustrated for clarity in an enlarged size (in a concrete embodiment, the distance between one cell and another is on the order of 2-3 mm.).

The temperature-regulating liquid enters the battery pack through an inlet 5A, and exits the battery pack through an outlet 6A. Outside the battery pack, the temperature-regulating liquid travels along a circuit (which will be illustrated in more detail later) including both a heater and a chiller, as well as a pump for activating the circulation of the temperature-regulating liquid, so that the temperature-regulating liquid exiting the battery pack is brought back to a suitable temperature field before being introduced again into the battery pack.

The temperature-regulating liquid used in immersion-type temperature regulation systems for battery packs is typically a dielectric oil, for example a mineral oil, or a synthetic oil, or a combination of mineral oil and synthetic oil. In oils of this type, the problem of a non-negligible variation in viscosity with temperature arises. In the case of very low temperature, for example during a cold start of an electric vehicle after a long stop in an environment at a temperature below 0°C, the significant increase in viscosity of the temperature-regulating oil results in a significantly higher demand for the torque provided by the electric motor driving the pump.

The problem therefore arises of promoting the correct operation of the pump in every operating condition, without excessive energy expenditure, and, at the same time, guaranteeing adequate temperature regulation action on the battery pack, both in conditions requiring cooling of the temperature-regulating liquid in the circuit outside the battery pack, and in conditions requiring heating of the temperature-regulating liquid traveling along said circuit. It is also necessary to preserve the correct operation of the pump that drives the liquid, avoiding overcurrents and consequent damage, and preparing conditions of use that prevent its oversizing to cope with high current demands in case of high viscosity values of the liquid. To the Applicants' knowledge, no solutions have been proposed in the past capable of effectively solving all the aforementioned problems.

There is therefore a perceived need for a substantial improvement in this field.

### Object of the invention

It is therefore an object of the invention to provide a system and a method for controlling the temperature of an electric battery pack of the type indicated at the beginning of the present description, which is capable of guaranteeing efficient temperature regulation of the battery pack in every operating and/or environmental condition, despite variations in the viscosity of the temperature-regulating liquid.

A further object of the invention is to provide a system and a method of the aforementioned type that allows promoting the correct operation of the pump that activates the circulation of the temperature-regulating liquid in every operating condition and in particular also in a condition where a low temperature tends to cause a significant increase in the viscosity of the temperature-regulating liquid.

Even more generally, an object of the invention is to provide a system and a method of the aforementioned type, with automatic reconfiguration of the path followed by the temperature-regulating liquid outside the battery pack based on the viscosity of the temperature-regulating liquid.

Yet a further object of the invention is to achieve all the aforementioned objectives with extremely simple and low-cost means.

### Summary of the invention

In view of achieving one or more of the aforementioned objects, the invention is directed to a system for controlling the temperature of an electric battery pack having the characteristics indicated in the attached claim 1. The invention is also directed to the control method implemented by means of said system, according to what is indicated in the attached claim 7.

Further advantageous characteristics of the invention are indicated in the dependent claims.

### Brief description of the figures

The characteristics and advantages of the invention will become apparent from the following description with reference to the attached drawings, provided by way of non-limiting example only, in which:
figure 1 is a schematic sectional view of a battery pack to which the system according to the invention is applicable,
figure 2 is a diagram of an example embodiment of a system according to the invention,
figures 3-6 illustrate four different operating modes of the system of figure 2, and
figure 7 is a block diagram illustrating the control method according to the invention.

### Detailed description of the invention

Figure 1 (already described above) illustrates, schematically, a battery pack of the type using an immersion-type temperature regulation system, to which the present invention is applicable. In the remaining figures, parts in common with figure 1 are indicated with the same reference numbers.

In figure 2, reference 3 indicates as a whole an example embodiment of the system according to the invention. The system 3 comprises the battery pack 1 having an inlet 5A for the entry of the temperature-regulating liquid into the battery pack 1 and an outlet 6A for the exit of the temperature-regulating liquid from the battery pack 1. The outlet 6A and the inlet 5A communicate with a circuit for the temperature-regulating liquid disposed outside the battery pack and indicated as a whole with 8. The circuit 8 comprises a pump 9, of any known type, for activating the circulation of the temperature-regulating liquid. The pump 9 is driven by an electric motor M, also of any known type.

The circuit 8 further includes a first main line, indicated as a whole with 8A, which connects the outlet 6A of the battery pack 1 with the inlet 9A of the pump 9, and a second main line, indicated as a whole with 8B, which connects the outlet 9B of the pump 9 with the inlet 5A of the battery pack 1.

In the first line 8A, a heater 10, a chiller 11 and a reservoir 13 for the temperature-regulating liquid are interposed in series. In the second line 8B, a filter 12 is interposed.

The construction details of the heater 10, the chiller 11, the reservoir 13 and the filter 12 are not described nor illustrated herein, since such components can be of any known type and as they, taken by themselves, do not fall within the scope of the present invention. At the same time, the elimination of such details from the drawings makes the latter more readily and easily understandable.

The circuit 8, forming part of the system according to the invention, comprises four electrically actuated control valves VLV1, VLV2, VLV3 and VLV4.

The first control valve VLV1 is interposed in the first line 8A between the outlet 6A of the battery pack 1 and the heater 10.

The control valve VLV1 is a three-way valve of any known type, having a first operating condition, wherein an inlet A communicates solely with an outlet B, and a second operating condition wherein the inlet A communicates solely with an outlet C (see figure 2). In its first operating condition, the first control valve VLV1 directs the flow of temperature-regulating liquid coming from the battery pack 1 through the heater 10. In its second operating condition, the first control valve VLV1 directs the flow of the temperature-regulating liquid coming from the battery pack 1 into a first auxiliary bypass line BY1 that bypasses the heater 10.

The second control valve VLV2 is interposed in the first line 8A between the heater 10 and the chiller 11 and is a three-way valve of any known type, having a first operating condition wherein an inlet A communicates solely with an outlet C, and a second operating condition wherein the inlet A communicates solely with an outlet B.

In its first operating condition, the second control valve VLV2 directs the flow of temperature-regulating liquid into a second auxiliary bypass line BY2 that bypasses the chiller 11. In its second operating condition, the second control valve VLV2 directs the flow of the temperature-regulating liquid through a chiller 11.

Still with reference to figure 2, the third control valve VLV3 is interposed in a third auxiliary line BY3 which directly connects the second auxiliary bypass line BY2 with the inlet 5A of the battery pack 1. The valve VLV3 is a two-way valve of any known type switchable between an open condition and a closed condition.

The fourth control valve VLV4 is interposed in a fourth auxiliary line BY4 which connects the second auxiliary line BY2 with the inlet 9A of the pump 9. The valve VLV4 is a two-way valve of any known type, switchable between an open condition and a closed condition.

The four valves VLV1, VLV2, VLV3 and VLV4 are of any known electrically actuated type, for example by means of respective solenoids.

With reference to figure 2, the system according to the invention comprises an electronic controller E, configured for controlling the four valves VLV1, VLV2, VLV3 and VLV4 as a function of a signal S received by the electronic controller E, which is indicative of a parameter correlated to the viscosity of the temperature-regulating liquid flowing in the circuit 8.

In the preferred embodiment illustrated herein, the signal S is a signal generated by a control unit E1 associated with the electric motor M, which drives the pump 9. The electronic unit E is configured for detecting the intensity of the electric current absorbed by the motor M. The signal S sent to the electronic controller E is representative of said current value.

When the viscosity of the temperature-regulating liquid increases following a temperature drop, the electric current absorbed by the electric motor M driving the pump 9 increases, for the same volumetric flow rate. The signal relating to the intensity of the electric current absorbed by the electric motor M driving the pump 9 is therefore indicative of a parameter correlated to the viscosity of the dielectric oil used as the temperature-regulating liquid.

The electronic controller E is configured and programmed to implement different operating modes of the four valves VLV1, VLV2, VLV3 and VLV4, as a function of the signal S. In particular, the electronic controller E is configured to implement different operating modes, depending on whether the value represented by the signal S falls within a specific range of values among two or more ranges of values.

In the example embodiment of the method according to the invention described herein, a memory is associated with the electronic controller E in which a nominal value Iₚₙₒₘ of the electric current absorbed by the electric motor driving the pump 9 is saved in the case of regular operation of the battery pack temperature regulation system.

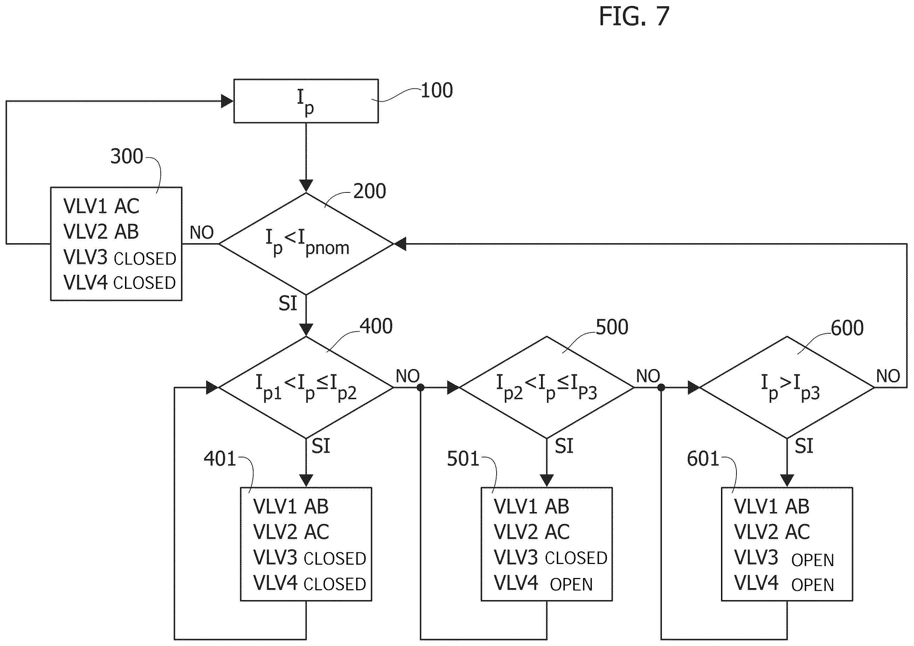

With reference also to figure 7, in a first phase of the method, represented by block 100, the electronic controller E receives the signal indicative of the current Iₚ absorbed by the electric motor M.

With reference again to figure 7, in block 200 a comparison is made between the current value Iₚ of the current absorbed by the motor M and the nominal value Iₚₙₒₘ. If the value of the currently absorbed current is equal to or less than the value Iₚₙₒₘ, the electronic controller implements in block 300 a first operating mode of the four valves VLV1, VLV2, VLV3, VLV4, corresponding to a cooling mode of the temperature-regulating liquid.

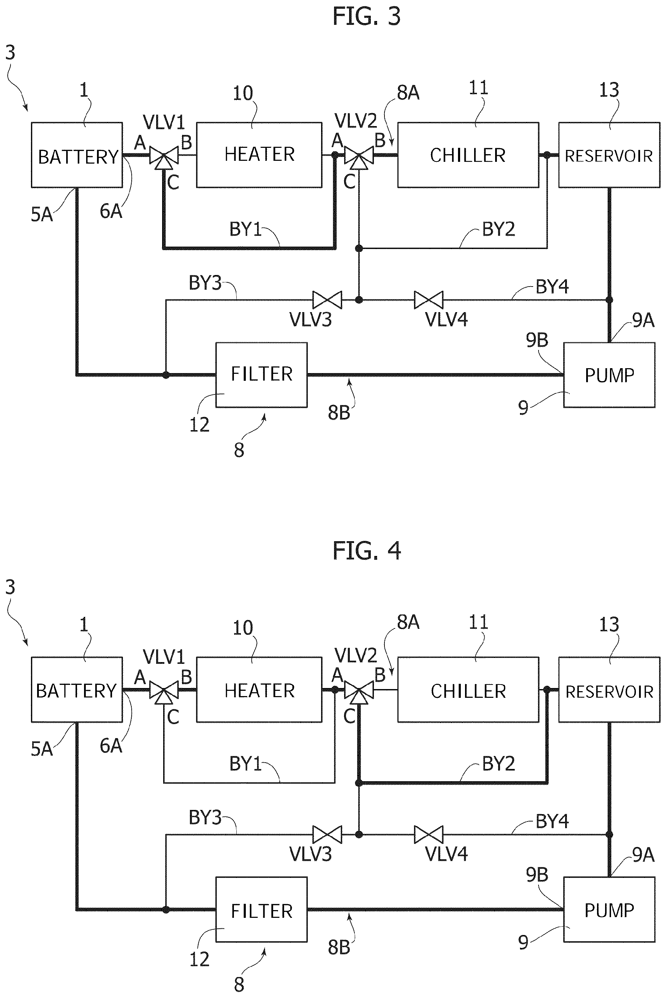

This operating mode is schematized in figure 3, where the path followed by the dielectric oil constituting the temperature-regulating liquid is illustrated with a bold line. As also visible in figure 7, in the operating mode of block 300, valve VLV1 is in the first operating condition corresponding to connection AC, valve VLV2 is in the first operating condition corresponding to connection AB, while valves VLV3 and VLV4 are closed. In this operating mode, the temperature-regulating liquid exiting the battery pack is directed into the auxiliary line BY1, so as to bypass the heater 10, while it is then directed through the chiller 11. From the chiller 11, the liquid proceeds through the reservoir 13, the pump 9 and the filter 12, and then returns to the battery pack 1.

With reference again to figure 7, in the example embodiment described herein, three increasing threshold values Iₚ₁, Iₚ₂, Iₚ₃ of the electric current absorbed by the motor M driving the pump 9 are saved in the memory associated with the electronic controller E. If the comparison in block 200 indicates that the currently absorbed current is greater than the nominal value Iₚₙₒₘ, the further comparisons indicated in blocks 400, 500, 600 are performed to detect within which range of values the current value of the absorbed current falls. If the comparison of block 400 shows that the currently absorbed current Iₚ is between the two threshold values Iₚ₁ and Iₚ₂ (the value Iₚ₁ in this example is considered equal to Iₚₙₒₘ), the method proceeds to the phase indicated in block 401, corresponding to a first heating operating mode, wherein valve VLV1 implements connection AB, valve VLV2 implements connection AC, while both valves VLV3 and VLV4 are closed. This operating mode is illustrated in figure 4, where the bold lines indicate the path followed by the temperature-regulating liquid. As can be seen, in this operating mode the temperature-regulating liquid passes through the heater 10 and bypasses the chiller 11 and then flows through the reservoir 13, the pump 9 and the filter 12 and then returns to the battery pack 1.

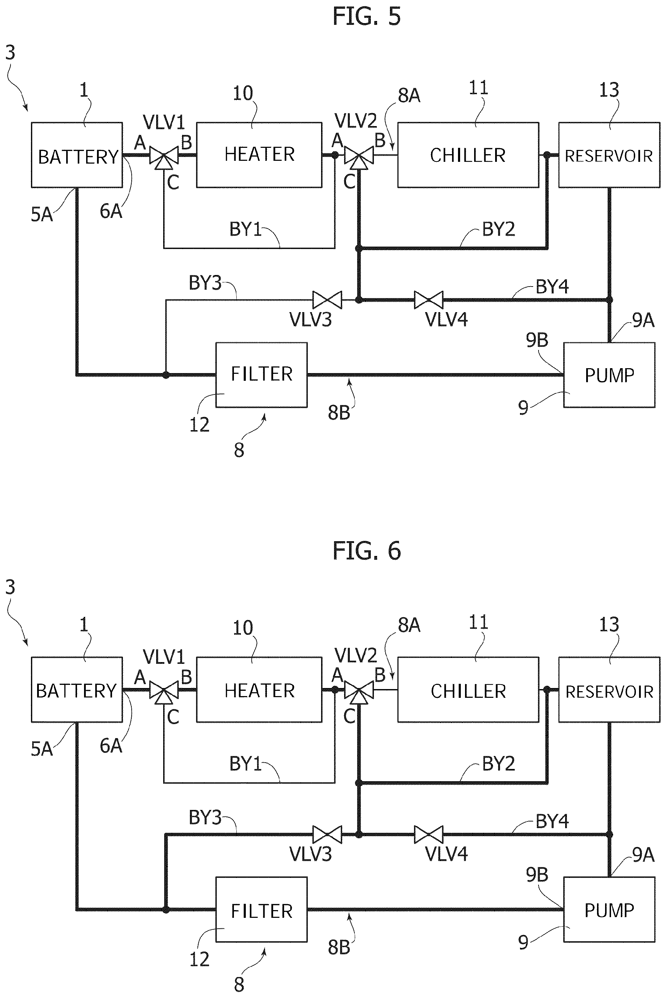

With reference again to figure 7, if in block 400 it is detected that the current value Iₚ of the current absorbed by the motor M is not between the values Iₚ₁ and Iₚ₂, the comparison in block 500 is performed to detect whether the absorbed current Iₚ is between the values Iₚ₂ and Iₚ₃. If affirmative, the method proceeds to the phase indicated in block 501, corresponding to a second heating operating mode, wherein valve VLV1 realizes connection AB, valve VLV2 realizes connection AC, valve VLV3 is closed and valve VLV4 is open. This operating mode is illustrated in figure 5, where the bold lines indicate the path followed by the temperature-regulating liquid. As can be seen, in this case the temperature-regulating liquid passes through the heater 10, bypasses the chiller 11, flowing both through line BY2, which leads it to flow through the reservoir 13 and the pump 9, and through the auxiliary line BY4, which leads it directly to the pump 9. At the outlet of the pump 9, the entire flow rate of the temperature-regulating liquid flows through the filter 12 and then returns to the battery pack 1.

With reference again to figure 7, in the case the comparison in block 500 shows that the currently absorbed current Iₚ is not between Iₚ₂ and Iₚ₃, the comparison in block 600 is performed to detect whether the currently absorbed current Iₚ is greater than the threshold value Iₚ₃, which is the largest of the stored threshold values. If the answer is affirmative, the method proceeds to the phase indicated in block 601, wherein a third heating operating mode is implemented. In this operating mode, valve VLV1 realizes connection AB, valve VLV2 realizes connection AC, and valves VLV3 and VLV4 are both open. This operating mode is illustrated in figure 6, where the bold lines indicate the path followed by the temperature-regulating liquid. As visible in figure 6, in this condition, the entire flow rate of the temperature-regulating liquid exiting the battery pack passes through the heater and then divides into a part that flows through the auxiliary line BY2, the reservoir 13 and the pump 9, a part that flows through the auxiliary line BY4 through the pump 9, without passing through the reservoir 13, and a part that flows through line BY3 to converge into the battery pack 1 without passing through the pump 9 and the filter 12. The operating mode of figure 6 is the one that meets the maximum heating requirements, allowing part of the flow exiting the heater to be used directly for heating the battery pack, while at the same time causing a lower flow to pass through the pump 9, thus facilitating the correct operation of the pump, despite the increase in viscosity of the dielectric oil constituting the temperature-regulating liquid.

If the comparison in block 600 gives a negative answer, the method returns to perform the comparison provided for in block 200.

Preferably, the operations described above for comparing the detected current value Iₚ with the threshold values are performed by applying hysteresis, according to per se known techniques, to avoid continuous variation of the operating conditions at the threshold values.

The comparisons of the detected current value Iₚ with the threshold values can be done via simple comparison operations or via more complex logics based on a set of rules and an inference logic (for example fuzzy logic), according to per se known techniques, to guarantee a more complete representation of the operating conditions.

Naturally, the principle of the invention remaining unchanged, the construction details and the forms of embodiment may vary widely with respect to what has been described by way of example only, without thereby departing from the scope of the present invention, as defined in the attached claims.

For example, the parameter correlated to the viscosity of the dielectric oil constituting the temperature-regulating liquid, which is used as an input signal S by the electronic controller E that controls the operating mode of the valves VLV1, VLV2, VLV3, VLV4, could be a parameter different from the electric current absorbed by the electric motor M driving the pump 9, for example the temperature of the oil at a determined point of the circuit (for example at the outlet 6A)..

Furthermore, the number of stored threshold values can also be lower or higher than that used in the example described herein.

Furthermore, the arrangement of the valves that control the path followed by the temperature-regulating liquid in the circuit 8 could also be different from that illustrated herein by way of example.

## Claims

1. System for controlling the temperature of an electric battery pack (1), including:
- an electric battery pack (1), comprising a container (4) and a plurality of battery cells (2) arranged within the container so as to come into direct contact with a flow of a temperature-regulating liquid through the space within the container (4),
- an inlet (5A) of the battery pack (1), defined in said container (4), for the entry of the temperature-regulating liquid into the battery pack (1),
- an outlet (6A) of the battery pack (1), defined in said container (4) for the exit of the temperature-regulating liquid from the battery pack (1),
- a circuit (8) for the temperature-regulating liquid outside the battery pack (1), including:
- a pump (9) driven by an electric motor (M), to activate the circulation of the temperature-regulating liquid in said circuit (8) and inside the battery pack (1), said pump (9) having a suction inlet (9A) and a delivery outlet (9B),
- a first main line (8A) connecting said outlet (6A) of the battery pack (1) with the inlet (9A) of the pump (9),
- a second main line (8B) connecting the outlet (9B) of the pump (9) with the inlet (5A) of the battery pack (1),
- a heater (10), a chiller (11) and a reservoir (13) for the temperature-regulating liquid, arranged in series in said first main line (8A),
wherein said temperature-regulating liquid is a dielectric oil having a viscosity variable as a function of temperature,
said system being **characterized in that** the circuit (8) outside the battery pack (1) further includes:
- a first electrically actuated control valve (VLV1), associated with said heater (10), switchable between a first operating condition (AB) in which it directs the flow of temperature-regulating liquid through the heater (10), and a second operating condition (AC), in which it directs the flow of temperature-regulating liquid into a first auxiliary line (BY1) for bypassing the heater,
- a second electrically actuated control valve (VLV2) associated with said chiller (11), switchable between a first operating condition (AC), in which it directs the flow of temperature-regulating liquid into a second auxiliary line (BY2) for bypassing the chiller (11), and a second operating condition (AB), in which it directs the flow of temperature-regulating liquid through the chiller (11),
- a third electrically actuated control valve (VLV3) interposed in a third auxiliary line (BY3) which connects the second auxiliary line (BY2) with the inlet (5A) of the battery pack, said third control valve (VLV3) being switchable between a closed condition and an open condition,
- a fourth electrically actuated control valve (VLV4), interposed in a fourth auxiliary line (BY4), which connects the second auxiliary line (BY2) with the inlet (9A) of the pump, said fourth control valve (VLV4) being switchable between a closed condition and an open condition, and
- an electronic controller (E) configured for controlling said first, second, third and fourth control valves (VLV1, VLV2, VLV3, VLV4) as a function of a signal (S) indicative of a parameter correlated to the viscosity of said temperature-regulating liquid, so as to automatically modify the path of said temperature-regulating liquid through the circuit (8) external to the battery pack (1) depending on whether the value of said signal (S) falls within a specific range of values among two or more ranges of values.

2. System according to claim 1, **characterized in that** the electric motor (M) driving the pump (9) is controlled by an electronic unit (E1) configured for detecting the value of the electric current absorbed by the electric motor (M), and **in that** the signal (S) used for controlling said first, second, third and fourth control valves (VLV1, VLV2, VLV3, VLV4) is sent to the electronic controller (E) by said electronic unit (E1) for controlling the electric motor (M) and is representative of said value of the current absorbed by the electric motor (M).

3. System according to claim 2, **characterized in that** the electronic controller (E) is configured for activating a first operating mode of said first, second, third and fourth control valves (VLV1, VLV2, VLV3, VLV4), corresponding to a cooling mode of the temperature-regulating liquid, when the value (Iₚ) of said signal (S) is less than a nominal value (Iₚₙₒₘ) corresponding to regular operation of the battery pack (1) and **in that** in said first operating mode:
- the first control valve (VLV1) is in its second operating condition (AC), wherein the heater (10) is bypassed,
- the second control valve (VLV2) is in its second operating condition (AB), wherein the flow of the temperature-regulating liquid is directed through the chiller (11),
- the third control valve (VLV3) is in its closed condition,
- the fourth control valve (VLV4) is in its closed condition.

4. System according to claim 3, **characterized in that** said electronic controller (E) is configured for activating a second operating mode of said first, second, third and fourth control valves (VLV1, VLV2, VLV3, VLV4), corresponding to a first heating mode, when the value (Iₚ) of said signal (S) is between a first threshold value (Iₚ₁) which is greater than said nominal value (Iₚₙₒₘ), and a second threshold value (Iₚ₂) which is greater than said first threshold value (Iₚ₁), and **in that** in said second operating mode:
- the first control valve (VLV1) is in its first operating condition (AB) wherein the flow of the temperature-regulating liquid is directed through the heater (10),
- the second control valve (VLV2) is in its first operating condition (AC), wherein the chiller (11) is bypassed,
- the third control valve (VLV3) is in its closed condition,
- the fourth control valve (VLV4) is in its closed condition.

5. System according to claim 4, **characterized in that** said electronic controller (E) is configured for activating a third operating mode of said first, second, third and fourth control valves (VLV1, VLV2, VLV3, VLV4) corresponding to a second heating operating mode, when the value (Iₚ) of said signal (S) is between said second threshold value (Iₚ₂) and a third threshold value (Iₚ₃) which is greater than said second threshold value (Iₚ₂), and **in that** in said third operating mode:
- the first control valve (VLV1) is in its first operating condition (AB), wherein the flow of the temperature-regulating liquid is directed through the heater (10),
- the second control valve (VLV2) is in its first operating condition (AC), wherein the chiller (11) is bypassed,
- the third control valve (VLV3) is in its closed condition, and
- the fourth control valve (VLV4) is in its open condition.

6. System according to claim 5, **characterized in that** said electronic controller (E) is configured for activating a fourth operating mode of said first, second, third and fourth control valves (VLV1, VLV2, VLV3, VLV4), corresponding to a third heating mode, when the value (Iₚ) of said signal (S) is greater than a third threshold value (Iₚ₃) which is greater than said second threshold value (Iₚ₂), and **in that** in said fourth operating mode:
- the first control valve (VLV1) is in its first operating condition (AB), wherein the flow of the temperature-regulating liquid is directed through the heater (10),
- the second control valve (VLV2) is in its first operating condition (AC), wherein the chiller (11) is bypassed,
- the third control valve (VLV3) is in its open condition,
- the fourth control valve (VLV4) is in its open condition.

7. Method for controlling the temperature of an electric battery pack (1), including:
- providing an electric battery pack (1), comprising a container (4) and a plurality of battery cells (2) arranged within the container so as to come into direct contact with a flow of a temperature-regulating liquid that passes through the internal space of the container (4), with an inlet (5A) of the battery pack (1) defined in said container (4) for the entry of the temperature-regulating liquid into the battery pack (1), an outlet (6A) of the battery pack (1) defined in said container (4) for the exit of the temperature-regulating liquid from the battery pack (1),
- providing a circuit (8) for the temperature-regulating liquid, outside the battery pack (1), including:
- a pump (9), driven by an electric motor (M), to activate the circulation of the temperature-regulating liquid in said circuit (8) and inside the battery pack (1), said pump (9) having a suction inlet (9A) and a delivery outlet (9B),
- a first main line (8A) connecting said outlet (6A) of the battery pack (1) with the inlet (9A) of the pump (9),
- a second main line (8B) connecting the outlet (9B) of the pump (9) with the inlet (5A) of the battery pack (1), and
- a heater (10), a chiller (11) and a reservoir (13) for the temperature-regulating liquid, arranged in series in said first main line (8A),
wherein said temperature-regulating liquid is a dielectric oil having a viscosity variable as a function of temperature,
said method being **characterized in that**:
- the circuit (8) external to the battery pack (1) is arranged with:
- a first electrically actuated control valve (VLV1) associated with said heater (10), switchable between a first operating condition (AB), wherein it directs the flow of temperature-regulating liquid through the heater (10) and a second operating condition (AC) wherein it directs the flow of temperature-regulating liquid into a first auxiliary line (BY1), for bypassing the heater (10),
- a second electrically actuated control valve (VLV2) associated with said chiller (11), switchable between a first operating condition (AC), wherein it directs the flow of temperature-regulating liquid into a second auxiliary line (BY2), for bypassing the chiller (11) and a second operating condition (AB) wherein it directs the flow of temperature-regulating liquid through the chiller (11),
- a third electrically actuated control valve (VLV3) interposed in a third auxiliary line (BY3) which connects the second auxiliary line (BY2) with the inlet (5A) of the battery pack (1), said third control valve (VLV3) being switchable between a closed condition and an open condition,
- a fourth electrically actuated control valve (VLV4), interposed in a fourth auxiliary line (BY4), which connects the second auxiliary line (BY2) with the inlet (9A) of the pump (9), said fourth control valve (VLV4) being switchable between a closed position and an open condition,
- said method further comprising controlling, via an electronic controller (E), said first, second, third and fourth control valves (VLV1, VLV2, VLV3, VLV4) as a function of a signal (S) indicative of a value of a parameter correlated to the viscosity of said temperature-regulating liquid, so as to automatically modify the path of said temperature-regulating liquid through the circuit (8) outside the battery pack (1) depending on whether the value of said signal (S) falls within a specific range of values among two or more predetermined ranges of values.

8. Method according to claim 7, **characterized in that** the electric motor (M) driving the pump (9) is controlled by an electronic unit (E1) configured for detecting the value of the electric current absorbed by the electric motor (M) and **in that** said signal (S), used for controlling said first, second, third and fourth control valves (VLV1, VLV2, VLV3, VLV4) is indicative of said value of the current absorbed by the electric motor (M).

9. Method according to claim 8, **characterized in that** it comprises activating, via said electronic controller (E), a first operating mode of said first, second, third and fourth control valves (VLV1, VLV2, VLV3, VLV4), corresponding to a cooling mode of the temperature-regulating liquid, when the value (I_{P}) of said signal (S) is less than a nominal value (I_{Pnom}) corresponding to regular operation of the battery pack (1) and **in that** in said first operating mode:
- the first control valve (VLV1) is in its second operating condition (AC) wherein the heater (10) is bypassed,
- the second control valve (VLV2) is in its second operating condition (AB), wherein the flow of the temperature-regulating liquid is directed through the chiller (11),
- the third control valve (VLV3) is in its closed condition,
- the fourth control valve (VLV4) is in its closed condition.

10. Method according to claim 9, **characterized in that** it comprises activating, via said electronic controller (E), a second operating mode of said first, second, third and fourth control valves (VLV1, VLV2, VLV3, VLV4), corresponding to a first heating mode, when the value (Iₚ) of said signal (S) is between a first threshold value (Iₚ₁) which is higher than said nominal value (Iₚₙₒₘ) and a second threshold value (Iₚ₂) which is higher than said first threshold value (Iₚ₁), and **in that** in said second operating mode:
- the first control valve (VLV1) is in its first operating condition (AB), wherein the flow of the temperature-regulating liquid is directed through the heater (10),
- the second control valve (VLV2) is in its first operating condition (AC), wherein the chiller (11) is bypassed,
- the third control valve (VLV3) is in its closed condition, and
- the fourth control valve (VLV4) is in its closed condition.

11. Method according to claim 10, **characterized in that** it comprises activating, via said electronic controller (E), a third operating mode of said first, second, third and fourth control valves (VLV1, VLV2, VLV3, VLV4), corresponding to a second heating mode, when the value of said signal (S) is between said second threshold value (Iₚ₂) and a third threshold value (Iₚ₃) which is higher than said second threshold value (Iₚ₂) and **in that** in said third operating mode:
- the first control valve (VLV1) is in its first operating condition (AB), wherein the flow of the temperature-regulating liquid is directed through the heater (10),
- the second control valve (VLV2) is in its first operating condition (AC), wherein the chiller (11) is bypassed,
- the third control valve (VLV3) is in its closed condition, and
- the fourth control valve (VLV4) is in its open condition.

12. Method according to claim 11, **characterized in that** it comprises activating, via said electronic controller (E), a fourth operating mode of said first, second, third and fourth control valves (VLV1, VLV2, VLV3, VLV4), corresponding to a third heating mode, when the value (Iₚ) of said signal (S) is higher than said third threshold value (Iₚ₃) and **in that** in said fourth operating mode:
- the first control valve (VLV1) is in its first operating condition (AB), wherein the flow of the temperature-regulating liquid is directed through the heater (10),
- the second control valve (VLV2) is in its first operating condition (AC), wherein the chiller (11) is bypassed,
- the third control valve (VLV3) is in its open condition, and
- the fourth control valve (VLV4) is in its open condition.
